# EUROPÄISCHE PATENTSCHRIFT

(11) **EP 3 732 109 B1**
(45) Veröffentlichungstag und Bekanntmachung des Hinweises auf die Patenterteilung: **25.08.2021**
(21) Anmeldenummer: 18779300.5
(22) Anmeldetag: 20.09.2018
(51) Int. Cl.: B65B 43/00, B65B 43/42, B65B 43/52, B65B 55/02

(54) **VERPACKUNGSEINRICHTUNG UND VERFAHREN ZUM BETREIBEN EINER VERPACKUNGSEINRICHTUNG**
PACKAGING DEVICE AND METHOD FOR OPERATING A PACKAGING DEVICE
DISPOSITIF D'EMBALLAGE ET PROCÉDÉ POUR FAIRE FONCTIONNER CE DISPOSITIF

(30) Priorität: 29.12.2017 DE 102017131434
(43) Veröffentlichungstag der Anmeldung: 04.11.2020
(73) Patentinhaber: SIG Technology AG, 8212 Neuhausen am Rheinfall (CH)
(72) Erfinder: KLAUS, Markus, 52249 Eschweiler (DE); ZAGAR, Franco, 47929 Grefrath (DE)
(74) Vertreter: Cohausz & Florack
(86) Internationale Anmeldenummer: PCT/EP2018/075411
(87) Internationale Veröffentlichungsnummer: WO 2019/129396

(56) Entgegenhaltungen:
- EP-A1- 2 420 450
- EP-A1- 2 743 192
- DE-A1-102012 112 792
- DE-A1-102014 102 630
- DE-A1-102014 118 776

## Beschreibung

Der Gegenstand betrifft eine Verpackungseinrichtung sowie ein Verfahren zum Betreiben einer Verpackungseinrichtung.

Aus Dokument DE 10 2014 102 630 A1 ist eine Transportvorrichtung mit Schiene und Transportschlitten bekannt. Dabei können die Transportelemente den speziellen Anforderungen der Teilstrecken und ihrer Behandlungsstationen angepasst werden.

Verpackungseinrichtungen im Sinne des Gegenstandes können jegliche Einrichtungen sein, die zum Verpacken eines Guts in einer Verpackung geeignet sind. Insbesondere können dies Verpackungseinrichtungen für die Lebensmittelindustrie sein, bei denen in aufgefaltete Packungen oder Schläuche flüssige, pastöse oder schüttfähige Güter eingefüllt werden. Bei diesen Vorgängen wird die Packung entlang verschiedener Arbeitsstationen in einem Produktivbereich bewegt. Für die Bewegung wird die Packung auf einem Transportmittel transportiert. Herkömmlicherweise werden als Transportmittel Kettenantriebe oder Bandantriebe eingesetzt. Diese zeichnen sich durch eine besondere Robustheit und geringe Fehleranfälligkeit aus.

Problematisch bei diesen Antrieben ist jedoch, dass diese anfällig gegenüber Verschmutzung sind, was insbesondere in der Lebensmittelindustrie relevant ist. Um Verunreinigungen des abzufüllenden Produkts zu vermeiden, sind höchste Hygienestandards einzuhalten. Um diese insbesondere bei der Abfüllung wenigstens eine flüssige Komponente enthaltende Lebensmittel einzuhalten, ist es erwünscht, möglichst wenige Teile in eine sterile Abfülleinrichtung (Aseptic-Zone) einer Füllmaschine hinein und aus ihr heraus zu bewegen und anschließend zu reinigen. Aus diesem Grunde lag dem Gegenstand die Aufgabe zugrunde, eine Verpackungseinrichtung zur Verfügung zu stellen, bei welcher eine Entkopplung der hygienisch relevanten Bauteile von zumindest Teilen des Transportsystems möglich ist.

Diese Aufgabe wird durch eine Verpackungseinrichtung nach Anspruch 1 sowie ein Verfahren nach Anspruch 20 gelöst.

Gegenständlich wird eine Abkehr von herkömmlichen Transportketten oder Transportbändern vollzogen. Die Verpackungen werden mit Hilfe von Transportschlitten bewegt. Die Transportschlitten werden dabei entlang zumindest einer Transportschiene bewegt.

Um zu verhindern, dass die Transportschiene in einem Gehäuse der Abfülleinrichtung geführt werden muss, wird vorgeschlagen, dass eine Rampe den Transportschlitten vor der Abfülleinrichtung von der Transportschiene trennt. Die Rampe kann dabei an der Transportschiene anliegen. Auch kann die Rampe seitlich der Transportschiene angeordnet sein. Darüber kann die Rampe zwischen zwei parallel zueinander verlaufenden Transportschienen angeordnet sein. Auch kann die Rampe den Träger zwischen den Transportschlitten anheben, so dass die Transportschlitten mittelbar von den Transportschienen abgehoben werden.

Über diese Rampe können die Transportschlitten während des Transports entlang der Transportschiene von der Transportschiene abgehoben werden. Dabei bleibt die magnetische Kopplung zwischen Transportschlitten und Transportschiene erhalten. Die Transportschlitten werden weiter in Transportrichtung durch die Transportschiene bewegt und bewegen sich dabei entlang der Rampe in ein Gehäuse des Produktivbereichs der Abfülleinrichtung, insbesondere der Aseptikeinheit. Nach der Abfüllung, an einer Ausschleusung erfolgt dieser Vorgang bevorzugt genau umgekehrt, die Transportschlitten werden über eine Rampe wieder an die Transportschiene heran geführt und es erfolgt eine unmittelbare Kopplung zwischen Transportschlitten und Transportschiene.

Zwischen der Transportschiene und dem Transportschlitten ist im Produktivbereich eine Wand angeordnet. Die Wand verläuft vorzugsweise parallel zu der Trajektorie der Transportschiene. Die Wand bildet eine mechanische Barriere, über die der Transportschlitten nicht weiter hinaus in Richtung Transportschiene gezogen werden kann. Dadurch entsteht ein Spalt zwischen dem Transportschlitten und der Transportschiene. Die Magnetkraft ist jedoch ausreichend, diesen Spalt zu überwinden, mit anderen Worten durchdringen die B-Feldlinien die Wand.

Die Wand ist bevorzugt aus einem paramagnetischen oder einem nicht ferromagnetischen Material gebildet. Die Wand ist bevorzugt aus Glas, Plexiglas, Kunststoff oder dergleichen gebildet. Bevorzugt ist die Wand aus nichtferromagnetischem Edelstahl gefertigt. Auch ist der Einsatz hitzebeständiger Kunststoffe wie PEEK möglich. Auch kann eloxiertes Aluminium zum Einsatz kommen. Ausreichende mechanische und chemische Eigenschaften und dazu den Vorteil der Durchsichtigkeit können auch durch Acrylglas erreicht werden. Für Wände unterhalb der Packungen kann auch bruchsicheres Echtglas zum Einsatz kommen.

Der Spalt ist bevorzugt wenige Millimeter breit, so dass einerseits die Wandstärke ausreichend groß sein kann, um der mechanischen Belastung stand zu halten, und andererseits die Magnetkraft ausreichend ist, den Transportschlitten durch die Transportschiene in Transportrichtung mitzunehmen.

Die Wand ist insbesondere eine Wand eines Gehäuses einer Aseptikeinheit. Eine solche Aseptikeinheit kann eine sterile Abfülleinrichtung sein. In der Aseptikeinheit erfolgt insbesondere die Abfüllung des Guts, insbesondere des Lebensmittels in die Packung, welche durch den Transportschlitten entlang der Transportmittel durch die Abfülleinrichtung bewegt wird.

Transportschlitten und Transportschiene können elektromotorisch in Wirkverbindung miteinander sein. Insbesondere erfolgt ein Antrieb der Transportschlitten elektromagnetisch. Hierbei können Transportschiene und Transportschlitten einen Linearmotor bilden. Der Vorteil des Linearmotors ist, dass jeder einzelne Transportschlitten individuell ansteuerbar sein kann. Hierzu weist jeder einzelne Transportschlitten vorzugsweise eine elektromagnetisch auslesbare Kennung auf. Ferner hat die Transportschiene Lesemittel, um die Position eines jeden Transportschlittens sowie die Kennung des Transportschlittens auslesen zu können. Dadurch kann durch eine geeignete Ansteuerung der Transportschiene eine individuelle Ansteuerung jedes einzelnen Transportschlittens erfolgen.

Es ist erkannt worden, dass eine Entkopplung der Transportschiene von einem hygienisch relevanten Bereich, insbesondere des sterilen Arbeitsbereichs, dadurch erreicht werden kann, dass der Transportschlitten durch die Wand von der Transportschiene getrennt ist. Dies wird dadurch erreicht, dass eine Rampe vorgesehen ist, über die der Transportschlitten von der Transportschiene abgehoben wird, ohne dass die magnetische Kopplung zwischen Transportschiene und Transportschlitten verloren geht. Der Transportschlitten wird magnetisch entlang der Transportschiene bewegt. Die Transportschiene transportiert den Transportschlitten getrennt durch die Wand berührungslos über eine magnetische Kopplung. Somit entsteht ein Spalt zwischen dem Transportschlitten und der Transportschiene, und dieser Spalt kann dazu genutzt werden, eine hygienische Barriere zwischen dem Transportschlitten auf der einen Seite und der Transportschiene auf der anderen Seite zu bilden.

Gemäß einem Ausführungsbeispiel wird vorgeschlagen, dass die Rampe ein sich verjüngendes Profil aufweist, wobei sich das Profil ausgehend von dem Produktivbereich hin zu einem Bereich vor dem Produktivbereich verjüngt. Das Profil der Rampe ist bevorzugt derart, dass der Schlitten mit stetig wachsendem Abstand von der Transportschiene abgehoben wird. Dabei kann die Rampe zumindest eine Klothoide beschreiben. Insbesondere kann die Rampe aus zwei gegenläufig zueinander liegenden Klothoiden geformt sein, so dass der Transportschlitten mit möglichst geringer Beschleunigung von der Transportschiene abgehoben wird und auf die Wand bewegt wird. Auch kann die Rampe trapezförmig profiliert sein. Insbesondere hat die Rampe endseitig ihren kleinsten Querschnitt (Wandstärke), welcher bis zu Wandstärke der Wand im Bereich des Übergangs von Rampe zu Wand anliegt, anwachsen kann.

Gemäß einem Ausführungsbeispiel wird vorgeschlagen, dass die Rampe im Bereich einer Einschleusung des Produktivbereichs für die Transportschlitten gebildet ist. Hierdurch wird der Transportschlitten im Bereich einer Einschleusung von der Transportschiene abgehoben. Die Rampe kann sich unmittelbar an die Transportschiene anschmiegen.

Gemäß einem Ausführungsbeispiel wird vorgeschlagen, dass eine Rampe im Bereich einer Ausschleusung des Produktivbereichs für die Transportschlitten gebildet ist. Hierdurch wird der Transportschlitten im Bereich einer Ausschleusung an die Transportschiene heran geführt. Die Rampe kann sich an die Transportschiene anschmiegen. Die Rampe an der Ausschleusung kann eine gleiche Profilierung haben, wie die Rampe an der Einschleusung. Das oben Gesagte gilt auch für die Rampe an der Ausschleusung. Wenn zuvor oder nachfolgend von Rampe die Rede ist, so kann das Gesagte stets für zumindest eine, bevorzugt aber beide Rampen Gültigkeit haben.

Gemäß einem Ausführungsbeispiel wird vorgeschlagen, dass die Rampe zumindest eine in Transportrichtung des Transportschlittens verlaufende Führungsnut aufweist. Die Führungsnut kann kongruent zu einer Führungsnut auf der Transportschiene gebildet sein. Die Rampe kann so geformt sein, dass sie in die Führungsnut der Transportschiene eingreift. Hiervon ausgehend kann sich die Führungsnut in der Rampe und anschließend ggf. auch in der Wand fortsetzen. Hierdurch wird der Transportschlitten an der Rampe so geführt wie auf der Transportschiene.

Gemäß einem Ausführungsbeispiel wird vorgeschlagen, dass die Rampe auswechselbar an der Wand angeordnet ist. Da im Bereich der Rampe, insbesondere im Bereich des Übergangs zwischen Transportschiene und Rampe die Rampe einer erhöhten mechanischen Belastung ausgesetzt ist und verschleißen kann, kann die Rampe austauschbar an der Wand angeordnet sein. Dadurch kann bei Bedarf die Rampe ohne aufwändigen Montageaufwand ausgetauscht werden.

Gemäß einem Ausführungsbeispiel wird vorgeschlagen, dass der Transportschlitten über zumindest eine Rolle an der Transportschiene und/oder der Wand geführt ist. An dem Transportschlitten ist zumindest eine, bevorzugt zumindest vier Rollen angeordnet, die in einer Führungsnut in der Transportschiene geführt sind. Eine Rolle kann auf ihrer Lauffläche u-förmig geformt sein und die korrespondierende Führungsnut kann ein hierzu entsprechendes Profil aufweisen. Durch die Rolle lässt sich der Transportschlitten entlang der Transportschiene bewegen. Die Rolle liegt unmittelbar auf der Transportschiene auf. Im Bereich der Rampe wird die Rolle von der Transportschiene auf die Rampe geführt. Von dort wird der Transportschlitten auf die Wand des Gehäuses geführt und dort im Produktivbereich bewegt.

Gemäß einem Ausführungsbeispiel wird vorgeschlagen, dass der Transportschlitten in dem Produktivbereich auf einem Lager gelagert ist, wobei das Lager zumindest in Teilen parallel zu der Transportschiene verläuft, insbesondere dass das Lager hydrostatisch oder hydrodynamisch ist, wobei der Schmierstoff insbesondere ölfrei ist und/oder wobei das Lager ein Luftkissenlager, ein Gleitlager oder ein Rollenlager ist. Ganz besonders bevorzugt wird als Schmierstoff ein Gas, insbesondere Sterilluft, verwendet. Das Gleitlager ist demnach zur Ausbildung eines statischen oder dynamischen Gaskissens, insbesondere mit Sterilluft betriebenen Luftkissens gestaltet.

Im Produktivbereich sollte an dem Transportschlitten möglichst wenig Abrieb durch seinen Vortrieb erzeugt werden. Daher wird der Transportschlitten im Produktivbereich gelagert.

Die Transportschiene gibt die Transporttrajektorie der Transportschlitten vor. Bevorzugt ist jeder einzelne Transportschlitten auf der Transportschiene unabhängig und individuell ansteuerbar. Durch eine elektromotorische Wirkverbindung zwischen der Transportschiene und den Transportschlitten kann jeder einzelne Transportschlitten individuell angesteuert werden und mit einer einstellbaren Geschwindigkeit, mit einem einstellbaren Beschleunigungsprofil, einem einstellbaren Hub und/oder an einen einstellbaren Ort der Transportschiene bewegt werden. Start und Stopp Zeiten für die Bewegung der einzelnen Transportschlitten sind ebenfalls individuell einstellbar.

Gemäß einem Ausführungsbeispiel wird vorgeschlagen, dass vor einer Einschleusung in den Produktivbereich der Transportschlitten unmittelbar, ohne eine Zwischenwand auf der Transportschiene geführt ist und dass nach einer Einschleusung der Transportschlitten durch die Wand von der Transportschiene getrennt ist. Die Rampe führt dazu, dass zwischen Transportschiene und Transportschlitten die Wand angeordnet sein kann. Über die Rampe wird der Transportschlitten während seiner Bewegung entlang der Transportschiene so von der Transportschiene angehoben, dass zwischen dem Transportschlitten und der Transportschiene die Wand ist. Durch die Wand ist die Transportschiene von dem Produktivbereich getrennt. Das hat den Vorteil, dass die Transportschiene nicht durch die Bearbeitung im Produktivbereich, insbesondere Hitze und Sterilisationsmittel, beeinträchtigt oder gar beschädigt wird. Auch ist die Reinigung des Produktivbereichs leichter, wenn darin nicht die Transportschiene geführt ist, die konstruktionsbedingt über eine Vielzahl an Lücken, Spalten und Löcher verfügen kann, die leicht verschmutzen aber schwer zu reinigen sind. Auch eine Belastung der Spulen, der Elektronik und/oder der Magnete in der Transportschiene durch die erhöhte Temperatur und ggf. die Umgebungsfeuchte im Produktivbereich kann vermieden werden.

Gemäß einem Ausführungsbeispiel wird vorgeschlagen, dass vor einer Ausschleusung aus dem Produktivbereich der Transportschlitten durch die Wand von der Transportschiene getrennt ist und dass nach einer Ausschleusung der Transportschlitten unmittelbar, ohne eine Zwischenwand auf der Transportschiene geführt ist. Nach dem Produktivbereich kann der Transportschlitten wieder auf der Transportschiene geführt werden. Durch die Rampe kann der Transportschlitten von der Führung entlang der Wand auf die Führung entlang der Transportschiene überführt werden.

Gemäß einem Ausführungsbeispiel wird vorgeschlagen, dass an einer Einschleusung in den Produktivbereich der Transportschlitten durch die Rampe von der Transportschiene auf die Wand geführt ist.

Gemäß einem Ausführungsbeispiel wird vorgeschlagen, dass an einer Ausschleusung aus dem Produktivbereich der Transportschlitten durch die Rampe von der Wand auf die Transportschiene geführt ist.

Ein Transportschlitten kann mechanisch mit einem Träger gekoppelt sein, der zur Aufnahme von vorzugsweise nach oben hin geöffneten, vorzugsweise am Boden oder Giebel bereits geschlossenen Packungen gebildet ist. Vorzugsweise können auf einem oder durch einen solchen Träger mehrere Packungen nebeneinander, quer zur Bewegungsrichtung der Packungen aufgenommen werden. Hierdurch ist eine parallele Verarbeitung von nebeneinander, quer zur Transportrichtung angeordneten Packungen möglich, so dass der Durchsatz der Verpackungsmaschine entsprechend der Anzahl der nebeneinander angeordneten Packungen erhöht werden kann.

Entlang eines Produktivbereichs (auch als Prozessbereich zu bezeichnen) kann eine Mehrzahl an Arbeitsstationen der Verpackungsmaschine angeordnet sein. Mit jedem Takt können die Transportschlitten/Verpackungen jeweils zu einer stromabwärts folgenden, insbesondere zur unmittelbar nächsten oder zur übernächsten Arbeitsstation bewegt werden und dort weiterverarbeitet werden. Nach dem Vorschub und der Verweilzeit kann ein Takt zu Ende sein und es erfolgt der nächste Takt.

Der Produktivbereich, hier insbesondere die sterile Abfülleinheit, auch als Aseptikeinheit bezeichnet, weist insbesondere folgende Arbeitsstationen alternativ oder kumulativ zueinander auf. Zunächst kann eine Sterilisationsstation vorgesehen sein, in der Sterilisationsmittel auf die Transportschlitten und/oder Träger und/oder Packungen aufgebracht wird, insbesondere aufgedampft wird. Eine weitere Arbeitsstation kann ein Einwirken des Sterilisationsmittels beinhalten. Eine weitere Arbeitsstation kann ein Trocknen des Transportschlittens, des Trägers und/oder der Packungen beinhalten. Weitere Arbeitsstationen können Fülleinheiten beinhalten, wobei die Fülleinheiten vorzugsweise in doppelter Ausfertigung nacheinander entlang der Transportrichtung so angeordnet sind, dass zu einem Zeitpunkt bzw. in einem Takt jeweils zumindest zwei Packungen, bei mehrbahniger Anordnung pro Packungsbahn, gefüllt werden können. Die Fülleinrichtungen können unterschiedliche Füllgeschwindigkeiten realisieren und beispielsweise auch unterschiedliche Produktmischungen beinhalten. Auch ist es möglich, dass eine erste Fülleinrichtung zusätzlich zu dem Produkt auch Inertgas zuführt, wohingegen eine zweite Fülleinrichtung ausschließlich das zu füllende Produkt zuführt. Eine weitere Arbeitsstation kann das Aufbringen von Dampf und/oder das Falten eines Packungsgiebels beinhalten. Eine weitere Arbeitsstation kann das Versiegeln des Packungsgiebels, insbesondere mit Ultraschall beinhalten. Hiernach kann die sterile Abfülleinheit beendet sein. Eine weitere Arbeitsstation kann aber auch beispielsweise das Aufbringen von Applikationen, beispielsweise von Ausgießern beinhalten. Die Arbeitsstationen, die nach dem Versiegeln folgen, können auch nach einem Ausschleusebereich der sterilen Abfülleinrichtung angeordnet sein. Diese Beschreibung des Produktivbereichs ist rein beispielhaft.

Der Transportschlitten kann eine untere Oberfläche und eine obere Oberfläche aufweisen, wobei die untere Oberfläche dem Transportmittel zugewandt ist und die obere Oberfläche von dem Transportmittel abgewandt ist. Dazu können zumindest vier Seitenflächen vorgehen sein, wobei die Flächennormalen von zwei seitlichen Seitenflächen senkrecht zur Bewegungsrichtung des Transportschlittens stehen. Zwei weitere Seitenflächen können mit ihrer Flächennormalen parallel zur Bewegungsrichtung des Transportschlittens ausgerichtet sein. Der Träger kann an einer Seitenfläche oder einer oberen Oberfläche es Transportschlittens angeordnet werden. Der Träger kann z.B. magnetisch an dem Transportschlitten befestigt sein. Die magnetische Kopplung kann zwischen dem Träger und der oberen Oberfläche und/oder zwischen dem Träger und einer seitlichen Seitenfläche erfolgen. Die B-Feldlinien können entweder im Wesentlichen parallel zur der Flächennormalen der oberen Oberfläche verlaufen oder im Wesentlichen parallel zur der Flächennormalen der seitlichen Seitenfläche verlaufen.

Gemäß einem Ausführungsbeispiel wird vorgeschlagen, dass die Transportschiene in einem Abfüllbereich entlang einer Aseptikeinheit geführt ist. Dabei ist die Transportschiene jedoch gegenüber dem Inneren der Aspetikeinheit durch das Gehäuse der Aspeptikeinheit abgegrenzt. Die Aseptikeinheit umschließt vorzugsweise die Transportschlitten. Die Aseptikeinheit dient zur aseptischen Führung der Transportschlitten und Packungen sowie ggf. Trägern im Füllbereich. Durch die Aseptikeinheit werden die Transportschlitten und die Packungen sowie gegebenenfalls die Träger vor dem Befüllen mit dem Produkt sterilisiert. Die Sterilisation wird vorzugsweise mit H₂O₂ durchgeführt. Der Transportkanal der Aseptikeinheit, in dem die Transportschlitten und gegebenenfalls Packungen und Träger geführt werden, sollte möglichst einen kleinen Querschnitt aufweisen und Transportschlitten, Träger und/oder Verpackungen radial umschließen. Die Transportschlitten werden durch die magnetische Kopplung mit der Transportschiene geführt, jedoch liegt die Transportschiene außerhalb der Aseptikeinheit und erfährt somit keine Verunreinigung durch die Aseptikeinheit. Zudem wirken sich die in der Aspeptikeinheit im Betrieb vorherrschenden Umweltbedingungen nicht oder nur gedämpft auf die Transportschiene samt deren Elektronik aus. Dies ist von Vorteil, da die Transportschiene ansonsten einem erhöhtem Verschleiß ausgesetzt wäre.

Gemäß einem Ausführungsbeispiel wird vorgeschlagen, dass die Aseptikeinheit die Transportschlitten radial umlaufend umschließt. D.h., dass umlaufend zu der Bewegungsrichtung der Transportschlitten die Aseptikeinheit den Transportschlitten umschließt. Insbesondere hat die Aseptikeinheit ein Gehäuse um den Transportschlitten herum. Entlang der Bewegungsrichtung des Transportschlittens hat die Sterilisationseinheit zumindest eine Eingangsöffnung und eine Ausgangsöffnung, über die die Packungen insbesondere auf Trägern ein- und ausgeschleust werden. Durch die Rampe wird der Transportschlitten an der Einschleusung von der Transportschiene räumlich getrennt. Durch die Bewegung von Transportschlitten gelangt die Wand zwischen Transportschlitten und Transportschiene, was die Trennung an der Einschleusung bewirkt. Während des Transports durch die Sterilisationseinheit sind Transportschlitten und/oder Träger und Packungen durch das Gehäuse umhaust und eine sterile Befüllung der Packungen kann erfolgen. An der Ausschleusung kann der Transportschlitten durch die Rampe wieder unmittelbar auf die Transportschiene, ohne die Wand dazwischen, geführt werden.

In der Aseptikeinheit wird zunächst Sterilisationsmittel, insbesondere H₂O₂ vorzugsweise in dampfförmigen Zustand zugeführt. Dabei kann H₂O₂ Dampf zugeführt werden, um die Sterilisierung thermisch zu unterstützen. Die Zuführung von H₂O₂ Dampf für eine Heißsterilisation, insbesondere für eine Dampfsterilisation, kann insbesondere während oder nach dem Zuführen des Produktes erfolgen, insbesondere an oder nach der Fülleinrichtung.

Außerhalb der Aseptikeinheit kann zudem eine (insbesondere zusätzliche) Sterilisierung der Transportschlitten erfolgen, um den Keimeintrag in die Aseptikeinheit zu verhindern und eine hohe Einwirkzeit an schwer zu sterilisierenden Bereichen zu gewährleisten.

Auch ist es möglich, dass die Transportmittel mehrteilig sind und ein erstes Transportmittel bis an die Einschleusung zu einem Gehäuse z.B. der Aseptikeinheit geführt ist, zwischen der Einschleusung und der Ausschleusung einer Transportschiene gebildet ist und nach der Ausschleusung ein drittes Transportmittel gebildet ist. Dabei kommt es zu einem Übergang des Transportschlittens zwischen den jeweiligen Transportmitteln. Die Transportmittel sind insbesondere zwei voneinander verschiedene Transportmittel, wobei im Bereich des Gehäuses z.B. eine Transportschiene gebildet ist, die als Linearmotor mit dem Transportschlitten wirkt und vor der Einschleusung und/oder nach der Ausschleusung ein Transportband, eine Transportkette oder dergleichen den Transportschlitten führt.

Gemäß einem Ausführungsbeispiel wird vorgeschlagen, dass der Transportschlitten auf einem Gleitlager gelagert ist. Das Gleitlager verläuft vorzugsweise in Teilen parallel zur Transportschiene. Das Gleitlager kann durch die Innenseite der Wand gebildet sein, welche zwischen dem Transportschlitten und der Transportschiene angeordnet ist.

Auch kann in der Wand beispielsweise eine Führungsnut oder eine Führungsnocke gebildet sein, entlang derer die Transportschlitten bewegt werden. Die Transportschlitten werden durch die Führung parallel zu der Transportschiene bewegt. Dabei kann ein Nutgrund verjüngend gebildet sein und somit die Rampe bilden.

Der Transport der Packungen entlang der Transportschiene kann mittels Trägern erfolgen. Die Packungen können in, an oder auf den Trägern gehalten sein. Die Träger werden durch den Transportschlitten entlang der Transportschiene bewegt.

Vorzugsweise kann an einem Transportschlitten ein Träger angeordnet sein, auf dem zumindest eine Packung, vorzugsweise jedoch zwei oder mehr als zwei Packungen gleichzeitig getragen werden. Der Träger kann dabei mechanisch so ausgestaltet sein, dass er den Boden oder den Giebel einer Verpackung aufnehmen kann. Der Träger kann mechanisch auch so ausgestaltet sein, dass er eine Verpackung klemmend, vorzugsweise seitlich klemmend aufnehmen kann

Insbesondere, gemäß einer eigenständig erfinderischen Ausgestaltung, die mit allen hier beschriebenen Merkmalen frei kombinierbar ist, kann der Träger von dem Transportschlitten relativ einfach entfernt und durch einen anderen Träger ausgetauscht werden. Somit kann der Transportschlitten für verschiedene Arten von Trägern als Führungsmedium dienen und auf verschiedenen Träger können verschiedene Verpackungstypen mit ggf. verschiedenen Querschnitten oder Formen zum Einsatz kommen. Der Träger ist von den Transportschlitten mechanisch lösbar. Dabei kann der Träger an dem Transportschlitten verrasten und durch geeignete Maßnahmen gelöst werden. Auch kann der Träger fest an dem Transportschlitten angeordnet sein.

Auch wird vorgeschlagen, dass ein Träger verschiedene Packungen derart aufnehmen kann, dass unabhängig von der Längenausdehnung der Packung bei verschiedenen Packungen jeweils an zumindest einem Ort der Transportschiene eine Oberkante der Packungen auf einem gleichen Niveau, insbesondere einem gleichen Abstand zur Transportschiene hat. Hierbei kann der Träger die Packungen entweder an verschiedenen Positionen in Längsrichtung aufnehmen oder der Träger kann die relative Lage der Packungen zur Schiene, insbesondere quer bzw. rechtwinklig zur Schiene verstellen. Hierdurch kann erreicht werden, dass eine Oberkante einer Packung, unabhängig von der Längsausdehnung einer Packung, an zumindest einer Stelle entlang der Transportschiene einen gleichen Abstand zu der Transportschiene hat. Dies ist insbesondere bei Packungen mit verschiedenen Füllvolumina sinnvoll, da hierdurch stets der gleiche Abstand einer Öffnung zu z.B. einer Fülleinrichtung eingehalten werden kann und die Packungen in einem gleichen Abstand entlang der Fülleinrichtung bewegt werden können und dort befüllt werden können.

Die Träger für die Packungen können an dem Transportschlitten befestigt sein. Insbesondere über Magnetverbindungen oder Clickverbindungen können die Träger an den Transportschlitten angeordnet sein, so dass sie leicht austauschbar sind. Auch ist es möglich, dass zwei Transportschlitten zueinander so beweglich sind, dass sie die Packung greifend aufnehmen. Dabei kann eine nach hinten (zur Bewegungsrichtung) weisende Kante eines ersten Transportschlittens bzw. eines ersten Trägers mit einer nach vorne (zur Bewegungsrichtung) weisenden Kante eines nachfolgenden Transportschlittens bzw. Trägers so interagieren, dass die Packung zwischen der hinteren Kante und der vorderen Kante verklemmt ist. Hierzu können die Transportschlitten so aufeinander zu bewegt werden, dass ein Verklemmen der Packungen zwischen den Transportschlitten bzw. den daran angeordneten Trägern erfolgen kann.

Die Transportschlitten können an der Transportschiene geführt werden. Zwar ist die Bewegung der Transportschlitten entlang der Transportschiene vorzugsweise elektromagnetisch, insbesondere in der Form eines Linearmotors, jedoch kann eine magnetische Führung nicht immer vollständig ausreichen, die Transportschlitten an der Transportschiene zu halten. Daher sind Rollen an dem Transportschlitten vorgesehen, die in entsprechenden Nuten oder Aufnahmen an der Führungsschiene geführt sind. Die Anzugskraft der Transportschiene auf die Transportschlitte ist insbesondere größer als die Schwerkraft der Transportschlitten. Die Rollen der Transportschlitten können in einer Nut oder an einer Nocke der Transportschiene geführt sein. An der Rampe können entsprechende Nuten oder Nocken gebildet sein, so dass die Transportschlitten entlang der Rampe entsprechend der Führung entlang der Transportschiene geführt sind. Gleiches gilt für das Innere des Gehäuses bzw. die Wand, an der die Transportschlitten ebenfalls gleichermaßen geführt werden können.

Wie bereits erläutert, ist an einem Transportschlitten vorzugsweise ein Träger zur Aufnahme von zumindest einer Packung angeordnet. Der Träger ist vorzugsweise derart am Transportschlitten angeordnet, dass er rechtwinklig zur Bewegungsrichtung des Transportschlittens mehrere Aufnahmen nebeneinander aufweist, an denen Packungen angeordnet werden können. Ein Träger kann beispielsweise T-förmig auf einem Transportschlitten aufgesetzt sein. Der Transportschlitten kann vorzugsweise mittig am Träger angeordnet sein. Der Träger kann zur Aufnahme verschiedenförmiger Packungen/Packungsformen gebildet sein. Auf einem Träger können zumindest zwei Packungen, auch mit verschiedenen Querschnitten angeordnet sein.

Auch ist es möglich, dass zumindest zwei parallel verlaufende Transportschienen vorgesehen sind. Diese sind vorzugsweise zueinander deckungsgleich in ihrem Verlauf und nebeneinander mit einem konstanten Abstand zueinander angeordnet. Zwischen diesen Transportschienen kann die Rampe angeordnet sein. Der Träger kann während seiner Bewegung an der Rampe anliegen, wodurch der Träger samt Schitten angehoben wird und die Schlitten somit von den Transportschienen abgehoben werden. An jeder sind die Transportschlitten gelagert. Jeweils zwei Transportschlitten sind synchronisiert auf den beiden Transportschienen geführt. D.h., dass auf jeder Transportschiene jeweils ein Transportschlitten vorgesehen ist, der mit jeweils einem anderen Transportschlitten der anderen Transportschiene synchronisiert ist. Die Synchronisation bedeutet, dass die Transportschlitten möglichst gleichförmig entlang der jeweiligen Transportschiene bewegt werden. Die Position der Transportschlitten in Bewegungsrichtung ist dabei vorzugsweise synchronisiert, so dass die Transportschlitten zu jeder Zeit möglichst die gleiche Position auf ihrer jeweiligen Transportschiene einnehmen. Zwischen den Transportschlitten kann ein Träger angeordnet sein, auf dem die Packungen angeordnet werden können.

Eine besonders gute Synchronisation der Transportschlitten wird dadurch realisiert, dass ein Transportschlitten an einer ersten der Transportmittel als Master-Schlitten angesteuert ist und ein Transportschlitten an einer zweiten der Transportmittel als Slave-Schlitten abhängig von dem Master-Schlitten geführt ist. Eine Master-Slave-Steuerung ermöglicht es, dass der Slave-Schlitten stets synchron zum Master-Schlitten geführt ist. Hierbei gibt der Master-Schlitten vorzugsweise die Position des Schlittens auf dem Transportmittel vor und der Slave-Schlitten folgt dieser Position unmittelbar und in Echtzeit. Dadurch wird ein synchroner Lauf der jeweils beiden Transportschlitten entlang ihrer jeweiligen Transportmittel ermöglicht. Wählt man einen virtuellen Transportschlitten als Masterschlitten aus, an dem sich die (beiden) Transportschlitten als Slave-Schlitten in gleichwertiger Abhängigkeit orientieren, erhält man eine ganz besonders gute Synchronisation.

Bei der Verpackungseinrichtung werden die Träger durch die Transportschlitten entlang der Trajektorie der Transportschiene zumindest in Abschnitten bewegt. Insbesondere kann an einer Einschleusung zu dem Produktivbereich, eine Übergabe von dem Transportschlitten über die Rampe von der Transportschiene an die Wand erfolgen. Darüber hinaus kann an einer Ausschleusung des entsprechenden Produktivbereichs eine Übergabe des Transportschlittens über die Rampe von der Wand auf die Transportschiene erfolgen.

Wie bereits erläutert, wird die Verpackungseinrichtung insbesondere auch in der Lebensmittelindustrie eingesetzt. In der Aseptikeinheit werden Packungen mit dem aufzunehmenden Produkt befüllt. Dabei ist das Produkt vorzugsweise ein Lebensmittel, insbesondere ein Getränk und kann bedarfsweise stückige Anteile aufweisen. Grundsätzlich sind die zu verpackenden Produkte schüttfähig oder rieselfähig, insbesondere fließfähig. Besonders bevorzugt sind entsprechende Packungen zur Aufnahme eines wenigstens eine flüssige Komponente aufweisenden Lebensmittels. Das Abfüllen des Lebensmittels erfolgt vorzugsweise in einer Abfülleinrichtung. Zur Vermeidung von Verschmutzung der Abfülleinrichtung durch die Transportschiene und umgekehrt wird vorgeschlagen, dass nur der Transportschlitten in einer Abfülleinrichtung geführt ist und die Transportschiene außerhalb. Der Transportschlitten samt Träger und Packungen kann vor der Abfülleinrichtung durch die Rampe von der Transportschiene gelöst werden. Dann verläuft die Transportschiene außerhalb der Abfülleinrichtung und nur der Transportschlitten samt Träger in der Abfülleinrichtung. Eine Abfülleinrichtung kann eine Aspektikeinheit umfassen oder als Aspektikeinheit gebildet sein. Somit wird nur der Transportschlitten innerhalb der Abfülleinrichtung, respektive der Aseptikeinheit geführt Dies führt zu einer erhöhten Reinheit der Abfülleinrichtung.

Darüber hinaus wird vorgeschlagen, dass die Transportschiene und die Transportschlitten als Linearmotor gebildet sind.

Gemäß einem Ausführungsbeispiel wird vorgeschlagen, dass die Transportschiene aus einem Stator des Linearmotors gebildet ist und insbesondere eine Mehrzahl entlang der Transportschiene angeordnete Magnetspulen aufweist. Durch eine geeignete Ansteuerung bzw. Erregung der Magnetspulen lässt sich das Magnetfeld entlang der Transportschiene variieren und vorzugsweise in Bewegungsrichtung verschieben. Die Transportschlitten können so dem sich verschiebenden Magnetfeld folgen. Vorzugweise ist die Anzahl der individuell ansteuerbaren Magnetfelder zumindest entsprechend der Anzahl der Transportschlitten auf der Transportschiene. Somit ist jeder einzelne Transportschlitten individuell ansteuerbar.

Die Transportschlitten folgen dem Magnetfeld der Transportschiene insbesondere dann, wenn diese als Permanentmagneten gebildet sind. Der Vorteil der Auslegung der Transportschlitten mit einem Permanentmagneten liegt darin, dass es nicht notwendig ist, die Transportschlitten bzw. darin angeordnete Magnetspulen elektrisch zu erregen, was einen elektrischen Kontakt zwischen den Transportschlitten und einer Kontaktschiene bedingte.

Vorzugsweise ist die Transportschiene Teil einer Transportvorrichtung, durch welche die Transportschlitten vorzugsweise umlaufend bewegt werden. Die Transportschiene bildet dabei vorzugweise einen Schenkel der Transportvorrichtung. Die Transportvorrichtung kann zumindest drei winklig zueinander verlaufende Schenkel aufweisen. Die Transportvorrichtung bildet vorzugsweise einen geschlossenen Ring mit insbesondere zumindest drei Schenkeln, von denen zumindest ein Schenkel eine Transportschiene sein kann.

Gemäß einem Ausführungsbeispiel wird vorgeschlagen, dass die Transportvorrichtung zumindest zwei einander gegenüberliegende Schenkel aufweist, wobei ein erster der Schenkel entlang des Produktivbereichs verläuft, in dem zumindest teilweise nur die Transportschlitten in der Fülleinrichtung der Verpackungsmaschine geführt sind und ein zweiter der Schenkel einen Pufferbereich bildet. Pufferbereich und Produktivbereich liegen somit auf einander gegenüberliegenden Seiten der Transportschiene. Zwischen dem Pufferbereich und dem Produktivbereich können die Packungen auf das Transportsystem übergeben oder von diesem entfernt werden. Die Übergabe kann z.B. mittels eines Dornrads erfolgen. Die Entfernung kann über einen Absetzer erfolgen. Gemäß einem Ausführungsbeispiel wird vorgeschlagen, dass die Transportvorrichtung zumindest zwei einander gegenüberliegende Schenkel aufweist. Die Schenkel sind bevorzugt vertikal zueinander versetzt. Über jeweils vertikale Schenkel können diese miteinander verbunden sein. Das heißt, dass sich die Transportvorrichtung in einer vertikalen Ebene bevorzugt erstreckt.

Aufgefaltete Packungsmäntel, insbesondere mit einem verschlossenen Boden oder Giebel, werden an einen jeweiligen Transportschlitten bzw. dessen Träger herangeführt. Die Packungen werden durch den Träger aufgenommen und zu dem Produktivbereich geführt. Der Produktivbereich kann eine Einschleusung in einen Abfüllbereich, insbesondere in eine sterile Abfülleinrichtung aufweisen. Ausgangsseitig der sterilen Abfülleinrichtung erfolgt eine Ausschleusung. An der Einschleusung kann Transportschlitten durch die Rampe von der Transportschiene abgelöst werden, so dass sich ein Spalt zwischen Transportschlitten und Transportschiene bildet. Dieses Ablösen kann durch eine auf dem Transportmittel aufliegende Rampe erfolgen. Die Rampe kann Teil des Gehäuses der sterilen Abfülleinrichtung sein. Durch die magnetische Kopplung jedoch wird der Transportschlitten entlang der Transportschiene bewegt.

Entlang des Produktivbereichs folgt der Transportschlitten der Transportschiene durch magnetische Kopplung. Dabei ist die Transportschiene außerhalb eines Gehäuses des Produktivbereichs und der Transportschlitten innerhalb des Gehäuses geführt.

An der Ausschleusung werden die gefüllten, vorzugsweise verschlossenen Verpackungen aus der Abfülleinrichtung heraus geführt. Dort ist es möglich, dass der Transportschlitten über die Rampe wieder auf die Transportschiene unmittelbar aufgesetzt wird.

Nachfolgend wird der Gegenstand anhand einer Ausführungsbeispiele zeigenden Zeichnung näher erläutert. In der Zeichnung zeigen:
- Fig. 1: eine schematische Ansicht eines Transportschlittens an einer Transportschiene;
- Fig. 2a-c: eine Einschleusung eines Transportschlittens über eine Rampe;
- Fig. 3a-c: eine Ausschleusung eines Transportschlittens über eine Rampe;
- Fig. 4a, b: Schnittanschichten eines Transportschlittens, einer Rampe und einer Transportschiene;
- Fig. 5a,b: ein Verlauf eines Profils einer Rampe entlang einer Bewegungsrichtung;
- Fig. 6: eine schematische Ansicht von Transportschlittens entlang einer Transportschiene;
- Fig. 7: eine schematische Ansicht eines Transportsystems gemäß einem Ausführungsbeispiel;
- Fig. 8: eine schematische Schnittansicht eines Transportsystems gemäß einem Ausführungsbeispiel;
- Fig. 9: eine Draufsicht auf ein Transportsystem gemäß einem Ausführungsbeispiel.

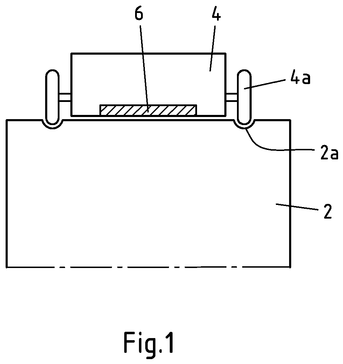

Fig. 1 zeigt eine Transportschiene 2, auf der beweglich gelagert ein Transportschlitten 4 angeordnet ist. Die Transportschiene 2 und der Transportschlitten 4 sind magnetisch über einen Permanentmagneten 6 miteinander gekoppelt. In der Transportschiene sind Magnetspulen vorgesehen, mit denen ein sich entlang der Transportschiene 2 bewegendes Magnetfeld erzeugbar ist. Durch magnetische Induktion in der Transportschiene 2 wird ein sich bewegendes Magnetfeld erzeugt, dessen Bewegung die Transportschlitten 4 in die Zeichenebene hinein oder aus der Zeichenebene heraus folgen. Das Prinzip eines Linearantriebs mit einem beweglich an einer Transportschiene 2 angeordneten Transportschlitten 4 ist an sich bekannt. Der Transportschlitten 4 ist beispielsweise über Rollen 4a in einer Führung 2a der Transportschiene 2 gelagert und in die Zeichenebene hinein oder aus der Zeichenebene heraus beweglich. Durch Veränderung des Magnetfelds entlang der Transportschiene 2 kann der Transportschlitten bewegt werden.

Der Transportschlitten 4 wird auf den Rollen 4a gelagert in einer Führung 2a der Transportschiene 2 geführt. Das Profil der Transportschiene 2 auf der dem Transportschlitten 4 zugewandten Seite ist, wie dargestellt, mit zwei Führungen 2a versehen. Ein entsprechendes Profil kann eine Rampe sowie eine Wand in einem Gehäuse aufweisen.

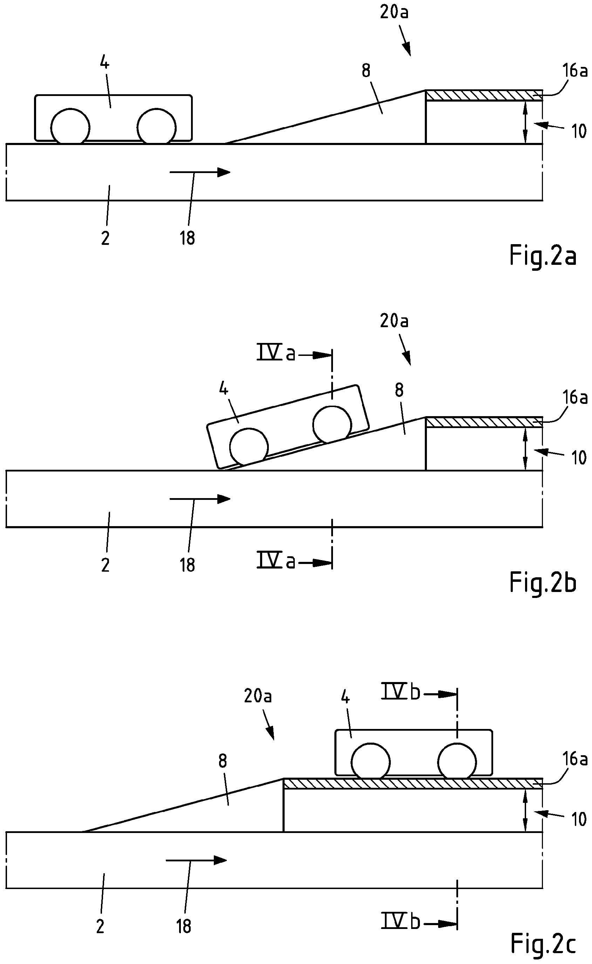

Die Fig. 2a-c zeigen den Transport eines Transportschlittens 4 entlang einer Transportschiene 2 in einer Bewegungsrichtung 18. In Fig. 2a ist zu erkennen, dass der Transportschlitten 4 auf der Transportschiene 2 gelagert ist und unmittelbar mit ihr in Kontakt ist. Im Bereich einer Einschleusung 20a ist eine Rampe 8 vorgesehen. Die Rampe 8 liegt unmittelbar auf der Transportschiene 2 auf. Die Rampe 8 hat ein sich in Transportrichtung 18 vergrößerndes Profil und ist insbesondere keilförmig. Durch den Transport des Transportschlittens 4 entlang der Bewegungsrichtung 18 wird der Transportschlitten 4 während seiner Bewegung, wie in der Fig. 2b gezeigt, auf die Rampe 8 bewegt. Dadurch wird der Transportschlitten 4 von der Transportschiene 2 abgehoben. In der weiteren Bewegung wird der Transportschlitten 4 von der Rampe 8 auf einen Boden 16a eines Gehäuses 16 einer Aspetikeinheit geführt.

Dies ist in Fig. 2c zu erkennen. Zu erkennen ist, dass der Transportschlitten 4 mit einem Spalt 10 von der Transportschiene 2 beabstandet ist.

Sowohl die Rampe 8 als auch der Boden 16a kann ein Profil aufweisen, wie es für die Transportschiene 2 in Fig. 1a gezeigt ist.

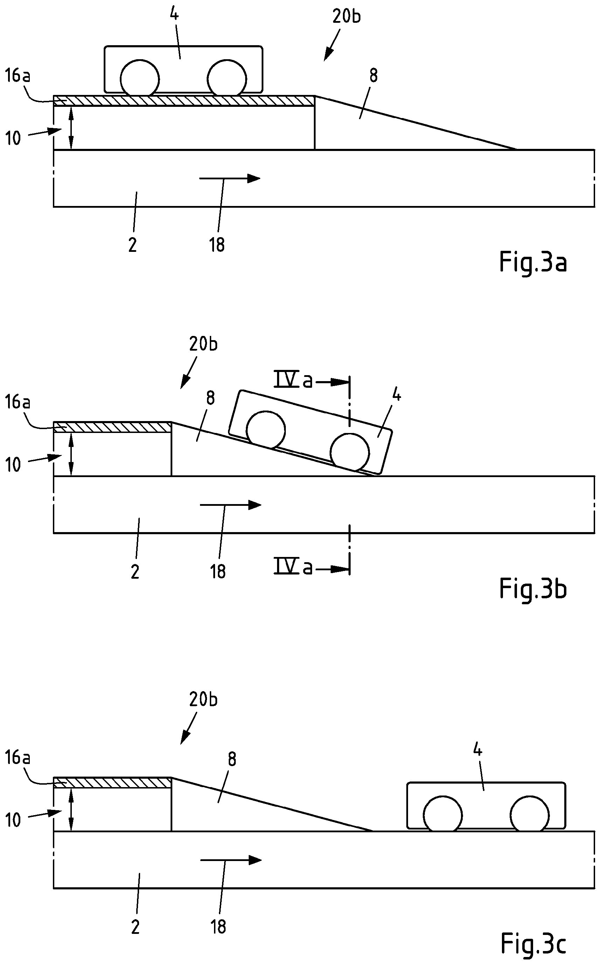

Die Fig. 3a-c zeigen den Transport des Transportschlittens 4 an einer Ausschleusung 20b entlang der Bewegungsrichtung 18. Zunächst ist der Transportschlitten 4 vollständig auf dem Boden 16a des Gehäuses geführt. Dies ist in der Fig. 3a zu erkennen.

Bei einer weiteren Bewegung entlang der Bewegungsrichtung 18 wird der Transportschlitten wie in der Fig. 3b gezeigt von dem Boden 16a des Gehäuses 16 auf die Rampe 8 überführt.

Schließlich wird der Transportschlitten 4, wie in der Fig. 3c gezeigt, weiter in Transportrichtung 18 bewegt und abschließend unmittelbar auf die Transportschiene 2 aufgesetzt.

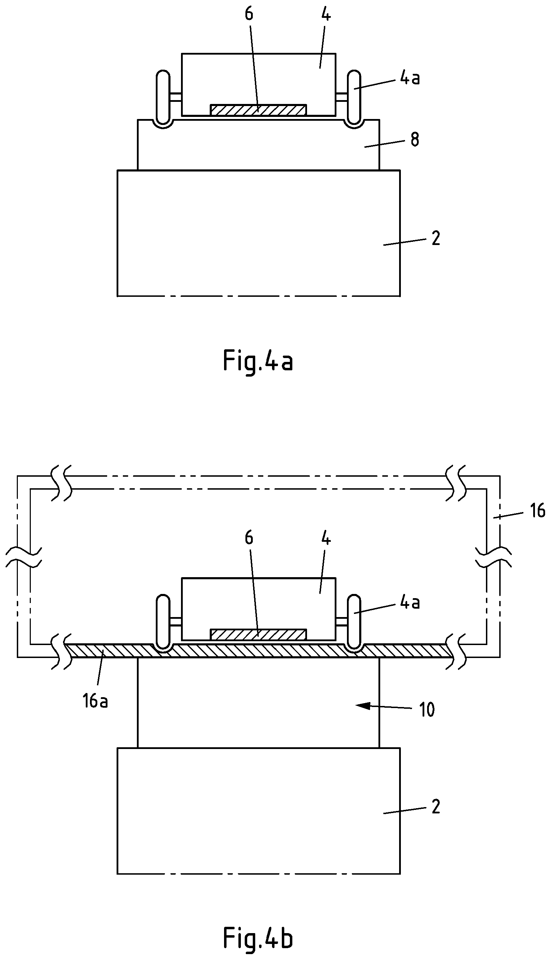

Fig. 4a zeigt den Schnitt IVa aus Fig. 2b mit einem Transportschlitten bei der Bewegung auf einer Rampe 8. Zu erkennen ist, dass die Rampe 8 dafür sorgt, dass der Transportschlitten 4 von der Transportschiene 2 abgehoben wird.

Fig. 4b zeigt den Schnitt IVb aus Fig. 2c bei dem der Transportschlitten 4 auf dem Boden 16a des Gehäuses 16 geführt ist. Der Boden 16a bildet zumindest teilweise die Wand zwischen Transportschlitten 4 und Transportschiene 2. Ein Spalt 10 ist zwischen dem Transportschlitten 4 und der Transportschiene 2 gebildet.

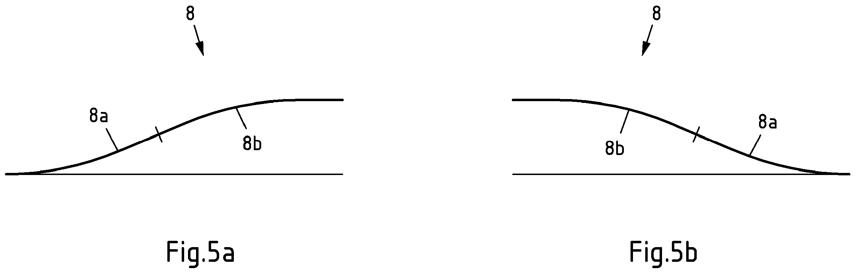

Fig. 5a und b zeigt eine Rampe 8 bzw. deren Profil an der Einschleusung 20a bzw. der Ausschleusung 20b.

Zu erkennen ist, dass die Rampe 8 in Fig. 5a aus zwei ineinander greifende Klothoiden 8a, 8b gebildet ist. Dies führt dazu, dass die Beschleunigung quer zur Bewegungsrichtung durch die Bewegung entlang der Rampe 8 minimiert ist. An der Ausschleusung, wie in Fig. 5b gezeigt, ist die Rampe 8 ebenfalls durch zwei ineinander übergehende Klothoide 8a, 8b gebildet.

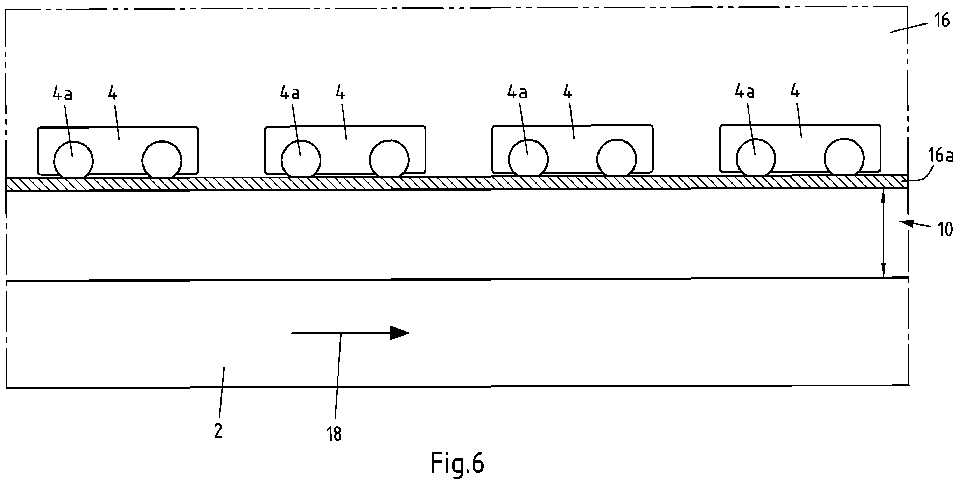

Zwischen dem Transportschlitten 4 und der Transportschiene 2 ist ein Luftspalt 10, in welchem eine Wand 16 einer Abfülleinrichtung, beispielsweise einer Aseptikeinheit, angeordnet ist. Die Wand 16 kann Teil eines Gehäuses einer solchen Aseptikeinheit sein. Das Gehäuse kann wie in Fig. 6 gezeigt, den Transportschlitten 4 vollständig umlaufen. Insbesondere die Bewegungsrichtung 18 des Transportschlittens 4 umlaufend. Die in der Fig. 6 gestrichelte Linie ist natürlich nur beispielhaft und das Gehäuse kann jede sinnvolle Form annehmen. Das Gehäuse 16 ist bevorzugt aus einem paramagnetischen oder nicht ferromagnetischen Material gebildet.

Fig. 6 zeigt ein Ausführungsbeispiel bei dem in Transportrichtung 18 entlang der Führungsschiene 2 eine Mehrzahl an Transportschlitten 4 angeordnet sind. Die Transportschlitten werden in Transportrichtung 18 durch eine magnetische Kopplung mit der Transportschiene 2 bewegt. Zwischen dem Transportschlitten 4 und der Transportschiene ist im Bereich des Gehäuses 16 die Wand 16a. Zwischen dem Transportschlitten 4 und der Transportschiene 2 ist ein Spalt 10, der zumindest in Teilen durch die Wand 16 ausgefüllt ist.

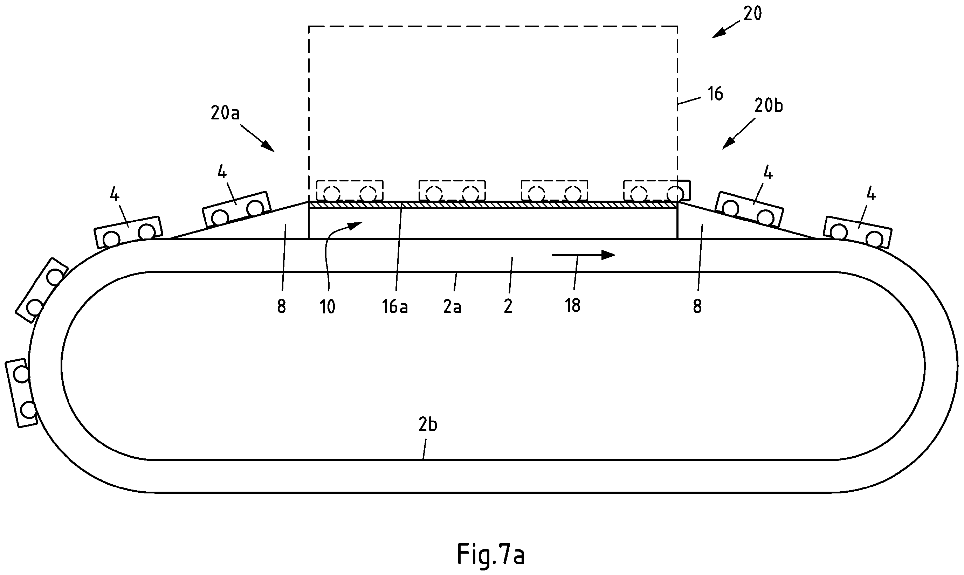

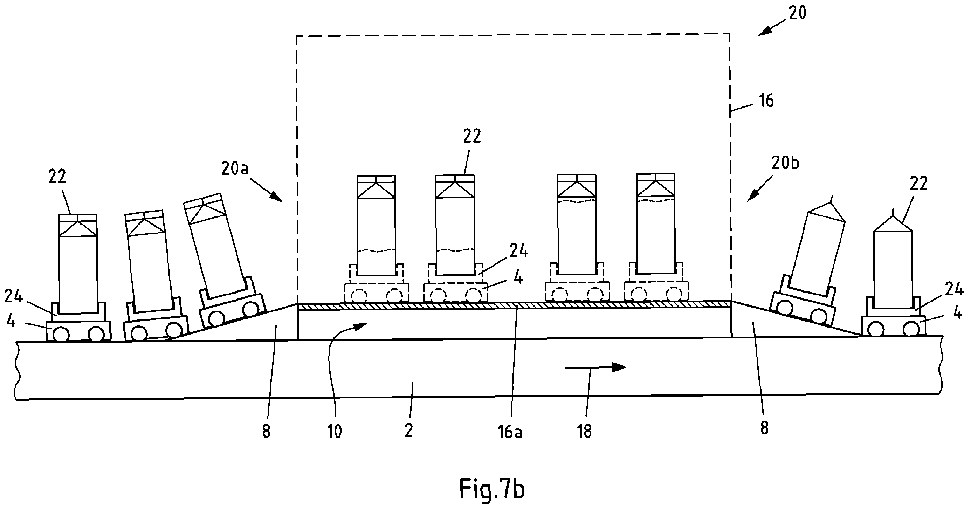

Fig. 7 zeigt ein Ausführungsbeispiel, bei dem die Transportschiene 2 einen ersten Schenkel 2a hat, der in einem Produktivbereich liegt und einen zweiten Schenkel 2b, der in einem Pufferbereich liegt. Dem Schenkel 2a zugeordnet ist beispielsweise eine Abfülleinrichtung, insbesondere eine Aseptikeinheit 20. In der Aseptikeinheit 20 werden Lebensmittel in Packungen abgefüllt. Die Aseptikeinheit 20 weist ein Gehäuse 16 mit der Wand auf.

Wie in Fig. 7b zu erkennen ist, werden aufgefaltete Packungsmäntel im Bereich einer Einschleusung 20a in die Aseptikeinheit 20 eingeführt und in einer Ausschleusung 20b werden gefüllte, vorzugsweise verschlossene Verpackungen aus der Aseptikeinheit 20 herausgeschleust. Innerhalb der Aseptikeinheit 20 werden die Packungen 22 vorzugsweise verschiedenen Verarbeitungsschritten zugeführt, insbesondere einem Sterilisationsschritt, einem Abfüllschritt und einem Siegelschritt. Weitere Schritte sind ebenfalls möglich. Die gesiegelten Packungen 22 werden an der Ausschleusung 20b aus der Aseptikeinheit 20 ausgeschleust.

Im Bereich der Aseptikeinheit 20 sind die Transportschlitten 4 entlang einer Führung geführt.

Die Transportschlitten 4 werden in Transportrichtung 18 durch magnetische Kopplung mit der Transportschiene 2 bewegt.

Die Packungen 22 können auf Trägern 24 geführt werden. Die Träger 24 sind insbesondere im Bereich der Aseptikeinheit 20 an den Transportschlitten 4 angeordnet.

Zu erkennen ist, dass die Packungen 22 zunächst an den Transportschlitten 4 vor der Einschleusung 20a angeordnet sind. Im Bereich der Einschleusung 20a werden die Transportschlitten 4 über die Rampe 8 in das Gehäuse 16 geführt. Im Bereich der Ausschleusung 20b werden die Transportschlitten 4 über die Rampe 8 aus dem Gehäuse 16 auf die Transportschiene 2 geführt.

Sowohl die Einschleusung als auch die Ausschleusung erfolgt vorzugsweise während einer kontinuierlichen und/oder beschleunigten (positiv und/oder negativ beschleunigt) Bewegung von Transportschlitten 4 entlang der Bewegungsrichtung 18.

Nach der Ausschleusung 20b werden die Verpackungen 22 durch die Transportschlitten 4 entlang der Transportschiene 2 weiter bewegt und einer nachfolgenden Bearbeitung zugeführt.

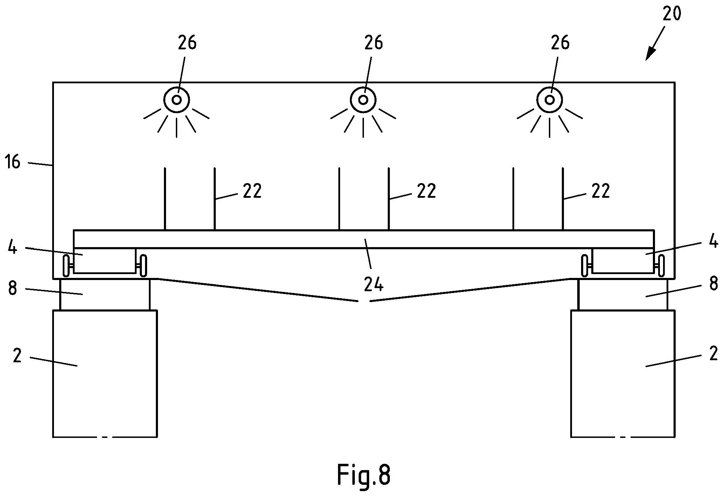

Fig. 8 zeigt eine Schnittansicht durch eine Aseptikeinheit 20. Zu erkennen ist, dass die Wand 16 der Aseptikeinheit 20 zwischen dem Transportschlitten 4 und der Transportschiene 2 angeordnet ist. Ferner ist zu erkennen, dass der Träger 24 zwischen jeweils zwei Transportschlitten 4 geführt ist. In der in Fig. 8 dargestellten Ansicht wird der Träger 24 durch die Transportschlitten 4 in die Zeichenebene hinein transportiert. Auf dem Träger 24 sind die Packungen 22 nebeneinander angeordnet.

In der Aseptikeinheit 20 können beispielsweise Düsen 26 vorgesehen sein, um Sterilisationsmittel, beispielsweise H₂O₂ auf die Packungen 22 und den Träger 24 zu dampfen oder sprühen, um diese vor einem Befüllen der Packungen 22 zu sterilisieren.

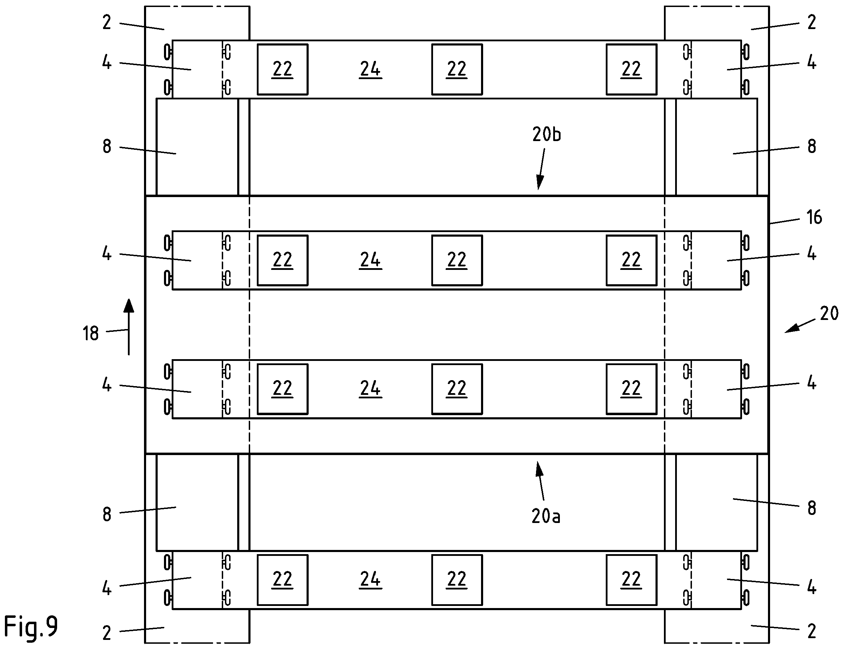

Fig. 9 zeigt eine Draufsicht auf eine Aseptikeinheit 20 mit geöffnetem Deckel. Der Boden der Aseptikeinheit 20 bildet die Wand 16 zwischen den Transportschlitten 4 und der Transportschiene. Zu erkennen ist, dass im Bereich der Einschleusung 20a die Transportschlitten 4 über die Rampe 8 auf den Boden des Gehäuses 16 geführt werden. Entlang der Transportrichtung 18 werden die Träger 24 im Bereich der Aseptikeinheit 20 durch die Transportschlitten 4 transportiert. Auf den Trägern 24 sind die Packungen 22 angeordnet. Im Bereich der Ausschleusung 20b werden die Transportschlitten 4 über eine Rampe 8 wieder auf die Transportschiene 2 bewegt.

### Bezugszeichenliste

- 2: Transportschiene / Transportmittel
- 2a,b: Schenkel
- 4: Transportschlitten
- 6: Permanentmagnet
- 8: Rampe
- 10: Spalt
- 16: Wand
- 18: Transportrichtung
- 20: Aseptikeinheit
- 20a: Einschleusung
- 20b: Ausschleusung
- 22: Packung
- 24: Träger

## Patentansprüche

1. Verpackungseinrichtung, insbesondere Fülleinrichtung, mit
- zumindest einer Transportschiene (2),
- zumindest einem an der Transportschiene angeordneten mit der Transportschiene elektromotorisch gekoppelten Transportschlitten (4), wobei
- der Transportschlitten wenigstens entlang eines Produktivbereichs der Verpackungseinrichtung bewegt wird,
**dadurch gekennzeichnet,**
- **dass** der Transportschlitten vor dem Produktivbereich unmittelbar auf der Transportschiene geführt ist und dass eine Rampe (8) den Transportschlitten räumlich von der Transportschiene trennt, so dass der Transportschlitten in dem Produktivbereich durch einer Wand (16) von der Transportschiene getrennt ist.

2. Verpackungseinrichtung nach Anspruch 1,
**dadurch gekennzeichnet,**
- **dass** die Rampe (8) ein sich verjüngendes Profil aufweist, wobei das Profil sich ausgehend von dem Produktivbereich hin zu einem Bereich vor dem Produktivbereich verjüngt.

3. Verpackungseinrichtung nach Anspruch 1 oder 2,
**dadurch gekennzeichnet,**
- **dass** die Rampe im Bereich einer Einschleusung (20a) des Produktivbereichs für die Transportschlitten gebildet ist. und/oder
- **dass** die Rampe im Bereich einer Ausschleusung (20b) des Produktivbereichs für die Transportschlitten gebildet ist.

4. Verpackungseinrichtung nach einem der vorangehenden Ansprüche,
**dadurch gekennzeichnet,**
- **dass** die Rampe zumindest eine in Transportrichtung des Transportschlittens verlaufende Führungsnut aufweist und/oder
- **dass** die Rampe auswechselbar an der Wand (16) angeordnet ist.

5. Verpackungseinrichtung nach einem der vorangehenden Ansprüche,
**dadurch gekennzeichnet,**
- **dass** der Transportschlitten über zumindest eine Rolle an der Transportschiene und/oder der Wand (16) geführt ist.

6. Verpackungseinrichtung nach einem der vorangehenden Ansprüche,
**dadurch gekennzeichnet,**
- **dass** der Transportschlitten (4) in dem Produktivbereich auf einem Lager gelagert ist, wobei das Lager zumindest in Teilen parallel zu der Transportschiene verläuft, insbesondere dass das Lager hydrostatisch oder hydrodynamisch ist, wobei der Schmierstoff insbesondere ölfrei ist und/oder wobei das Lager ein Luftkissenlager, ein Gleitlager oder ein Rollenlager ist.

7. Verpackungseinrichtung nach einem der vorangehenden Ansprüche,
**dadurch gekennzeichnet,**
- **dass** vor einer Einschleusung (20a) in den Produktivbereich der Transportschlitten unmittelbar, ohne eine Zwischenwand auf der Transportschiene geführt ist und dass nach einer Einschleusung der Transportschlitten durch die Wand von der Transportschiene getrennt ist und/oder
- **dass** vor einer Ausschleusung aus dem Produktivbereich der Transportschlitten durch die Wand von der Transportschiene getrennt ist und dass nach einer Ausschleusung der Transportschlitten unmittelbar, ohne eine Zwischenwand auf der Transportschiene geführt ist.

8. Verpackungseinrichtung nach einem der vorangehenden Ansprüche,
**dadurch gekennzeichnet,**
- **dass** an einer Einschleusung (20a) in den Produktivbereich der Transportschlitten durch die Rampe von der Transportschiene auf die Wand geführt ist und/oder
- **dass** an einer Ausschleusung aus dem Produktivbereich der Transportschlitten durch die Rampe (8) von der Wand (16) auf die Transportschiene (2) geführt ist.

9. Verpackungseinrichtung nach einem der vorangehenden Ansprüche,
**dadurch gekennzeichnet,**
- **dass** an dem Transportschlitten ein Träger (24) für zumindest eine Verpackung angeordnet ist, insbesondere
- **dass** der Träger lösbar an dem Transportschlitten angeordnet ist.

10. Verpackungseinrichtung nach einem der vorangehenden Ansprüche,
**dadurch gekennzeichnet,**
- **dass** die Transportschiene (2) und die Transportschlitten als Linearmotor gebildet sind und/oder
- **dass** die Transportschiene aus einem Stator des Linearmotors gebildet ist und insbesondere eine Mehrzahl entlang der Trajektorie angeordnete Magnetspulen aufweist.

11. Verpackungseinrichtung nach einem der vorangehenden Ansprüche,
**dadurch gekennzeichnet,**
- **dass** die Transportschiene zumindest einen Schenkel (2a, b) entlang einer Transportvorrichtung aufweist, insbesondere dass die Transportvorrichtung einen geschlossenen Ring mit zumindest einem Schenkel in der Form der Transportschiene bildet.

12. Verpackungseinrichtung nach einem der vorangehenden Ansprüche,
**dadurch gekennzeichnet,**
- **dass** die Transportschlitten (4) auf der Transportschiene rollend gelagert sind und durch eine magnetische Kopplung an der Transportschiene gehalten sind.

13. Verpackungseinrichtung nach einem der vorangehenden Ansprüche,
**dadurch gekennzeichnet,**
- **dass** der Produktivbereich eine Abfülleinrichtung, insbesondere eine sterile Abfülleinrichtung ist und/oder dass die Wand (16) eine Wand einer insbesondere sterilen Abfülleinrichtung ist und/oder dass die Wand Teil eines Gehäuses der insbesondere sterilen Abfülleinrichtung ist.

14. Verpackungseinrichtung nach einem der vorangehenden Ansprüche,
**dadurch gekennzeichnet,**
- **dass** die Transportschiene (2) im Füllbereich außerhalb der Abfülleinrichtung geführt wird, wobei die Abfülleinrichtung den Transportschlitten umlaufend umschließt.

15. Verfahren zum Betreiben einer Verpackungseinrichtung, insbesondere Füllmaschine bei dem
- zumindest ein Transportschlitten (4) entlang einer Transportschiene (2) bewegt wird, und
- Verpackungen in einem Strom entlang eines Produktivbereichs der Transportschiene durch die Transportschlitten bewegt werden,
**dadurch gekennzeichnet,**
- **dass** der Transportschlitten vor dem Produktivbereich unmittelbar auf der Transportschiene geführt wird und dass der Transportschlitten über eine Rampe (8) räumlich von der Transportschiene entfernt wird, so dass der Transportschlitten in dem Produktivbereich mittelbar auf einer Wand (16) des Produktivbereichs von der Transportschiene geführt wird.

## Claims

1. Packaging device, in particular filling device, with
- at least one transport rail (2)
- at least one transport carriage (4) arranged on the transport rail and electromotorically coupled to the transport rail by an, wherein
- the transport carriage is moved at least along a productive region of the packaging device,
**characterized in that**
- the transport carriage is guided directly on the transport rail upstream of the productive region, and **in that** a ramp (8) spatially separates the transport carriage from the transport rail, so that the transport carriage is separated from the transport rail in the productive region by a wall (16).

2. Packaging device according to claim 1,
**characterized in that**
- the ramp (8) has a tapering profile, the profile tapering from the productive region towards an area in front of the productive region.

3. Packaging device according to claim 1 or 2,
**characterized in that**
- the ramp is formed in the region of an infeed (20a) of the productive region for the transport carriages, and/or
- the ramp is formed in the region of a outfeed (20b) of the productive region for the transport carriages.

4. Packaging device according to one of the preceding claims,
**characterized in that**
- the ramp has at least one guide groove running in the transport direction of the transport carriage and/or
- the ramp is interchangeably arranged on the wall (16).

5. Packaging device according to one of the preceding claims,
**characterized in that**
- the transport carriage is guided via at least one roller on the transport rail and/or the wall (16).

6. Packaging device according to one of the preceding claims,
**characterized in that**
- the transport carriage (4) is mounted on a bearing in the productive region, the bearing running at least in parts parallel to the transport rail, in particular **in that** the bearing is hydrostatic or hydrodynamic, the lubricant being in particular oil-free, and/or the bearing being an air cushion bearing, a sliding bearing or a roller bearing.

7. Packaging device according to one of the preceding claims,
**characterized in that**
- upstream of an infeed (20a) into the productive region, the transport carriage is guided directly, without an intermediate wall, on the transport rail, and **in that**, after an infeed, the transport carriage is separated from the transport rail by the wall, and/or
- upstream of an outfeed of the productive region, the transport carriage is separated from the transport rail by the wall, and **in that**, after being outfed, the transport carriage is guided directly on the transport rail without an intermediate wall.

8. Packaging device according to one of the preceding claims,
**characterized in that**
- at an infeed (20a) into the productive region the transport carriage is guided by the ramp from the transport rail onto the wall and/or
- at an outfeed from the productive region, the transport carriage is guided by the ramp (8) from the wall (16) onto the transport rail (2).

9. Packaging device according to one of the preceding claims,
**characterized in that**
- a carrier (24) for at least one package is arranged on the transport carriage, in particular
- the carrier is detachably arranged on the transport carriage.

10. Packaging device according to one of the preceding claims,
**characterized in that**
- the transport rail (2) and the transport carriages are formed as a linear motor and/or
- the transport rail is formed from a stator of the linear motor and, in particular, has a plurality of magnetic coils arranged along the trajectory.

11. Packaging device according to one of the preceding claims,
**characterized in that**
- the transport rail has at least one leg (2a, b) along a transport device, in particular that the transport device forms a closed ring with at least one leg in the shape of the transport rail.

12. Packaging device according to one of the preceding claims,
**characterized in that**
- the transport slides (4) are mounted on the transport rail in a rolling manner and are held on the transport rail by a magnetic coupling.

13. Packaging device according to one of the preceding claims,
**characterized in that**
- the productive region is a filling device, in particular a sterile filling device, and/or **in that** the wall (16) is a wall of a filling device, in particular a sterile filling device, and/or **in that** the wall is part of a housing of the filling device, in particular a sterile filling device.

14. Packaging device according to one of the preceding claims,
**characterized in that**
- the transport rail (2) is guided in the filling region outside the filling device, the filling device circumferentially enclosing the transport carriage.

15. Method of operating a packaging device, in particular a filling machine, in which
- at least one transport carriage (4) is moved along a transport rail (2), and
- packages are moved in a stream along a productive region of the transport rail by the transport carriages,
**characterized in that**
- the transport carriage is guided directly on the transport rail upstream of the productive region, and **in that** the transport carriage is spatially separated from the transport rail via a ramp (8), so that the transport carriage is guided indirectly by the transport rail on a wall (16) of the productive region.

## Revendications

1. Dispositif à emballer, en particulier dispositif à verser, avec
- au moins un rail de transport (2)
- au moins un charriot de transport (4) disposé sur le rail de transport couplé au rail de transport par un moteur électrique, dans lequel
- le charriot de transport est déplacé au moins le long d'une zone productive du dispositif à emballer,
**caractérisé en ce**
- **que** le charriot de transport est guidé directement sur le rail de transport en amont de la zone productive, et qu'une rampe (8) sépare spatialement le charriot de transport du rail de transport, de telle sorte que le charriot de transport est séparé du rail de transport dans la zone productive par une paroi (16).

2. Dispositif à emballer selon la revendication 1,
**caractérisé en ce**
- **que** la rampe (8) a un profil aminci, le profil s'aminicissant à partir de la zone productive vers une zone en amont de la zone productive.

3. Dispositif à emballer selon revendication 1 ou 2,
**caractérisé en ce**
- **que** la rampe est formée dans la région d'une entrée (20a) de la zone productive pour les charriots de transport, et/ou
- **que** la rampe est formée dans la région d'une sortie (20b) de la zone productive pour les charriots de transport.

4. Dispositif à emballer selon l'une des revendications précédentes,
**caractérisé en ce**
- **que** la rampe a au moins une rainure de guidage s'étendant dans la direction de transport du charriot de transport, et/ou
- **que** la rampe est disposée de manière interchangeable sur la paroi (16).

5. Dispositif à emballer selon l'une des revendications précédentes,
**caractérisé en ce**
- **que** le charriot de transport est guidé par au moins un rouleau sur le rail de transport et/ou sur la paroi (16).

6. Dispositif à emballer selon l'une des revendications précédentes,
**caractérisé en ce**
- **que** le charriot de transport (4) est monté sur un palier dans la zone productive, où le palier s'étend au moins en partie parallèlement au rail de transport, en particulier en ce que le palier est hydrostatique ou hydrodynamique, où le lubrifiant est en particulier exempt d'huile et/ou le palier est un palier à coussin d'air, un palier lisse ou un palier à rouleaux.

7. Dispositif à emballer selon l'une des revendications précédentes,
**caractérisé en ce**
- **que**, en amont d'une entrée (20a) dans la zone productive, le charriot de transport est guidé directement, sans une paroi intermédiaire, sur le rail de transport, et que, en aval d'une entrée, le charriot de transport est séparé du rail de transport par la paroi, et/ou
- **que**, en amont d'une sortie de la zone productive, le charriot de transport est séparé du rail de transport par la paroi, et que, en aval d'une sortie, le charriot de transport est guidé directement, sans paroi intermédiaire sur le rail de transport.

8. Dispositif à emballer selon l'une des revendications précédentes,
**caractérisé en ce**
- **que**, sur une entrée (20a) dans la zone productive, le charriot de transport est guidé par la rampe depuis le rail de transport sur la paroi et/ou
- **que**, à une sortie de la zone productive, le charriot de transport est guidé par la rampe (8) depuis la paroi (16) sur le rail de transport (2).

9. Dispositif à emballer selon l'une des revendications précédentes,
**caractérisé en ce**
- **qu'**un support (24) pour au moins un emballage est disposé sur le charriot de transport, en particulier
- **que** le support est disposé de manière amovible sur le charriot de transport.

10. Dispositif à emballer selon l'une des revendications précédentes,
**caractérisé en ce**
- **que** le rail de transport (2) et le charriot de transport sont formés comme un moteur linéaire et/ou
- **que** le rail de transport est formé d'un stator du moteur linéaire et, en particulier, a une pluralité de bobines magnétiques disposées le long de la trajectoire.

11. Dispositif à emballer selon l'une des revendications précédentes,
**caractérisé en ce**
- **que** le rail de transport a au moins une branche (2a, b) le long d'un dispositif de transport, en particulier que le dispositif de transport forme un anneau fermé avec au moins une branche sous la forme du rail de transport.

12. Dispositif à emballer selon l'une des revendications précédentes,
**caractérisé en ce**
- **que** les charriots de transport (4) sont montés de manière roulante sur le rail de transport et sont maintenus sur le rail de transport par un accouplement magnétique.

13. Dispositif à emballer selon l'une des revendications précédentes,
**caractérisé en ce**
- **que** la zone productive est un dispositif à verser, en particulier un dispositif à verser stérile, et/ou que la paroi (16) est une paroi d'un dispositif à remplir, en particulier stérile, et/ou que la paroi fait partie d'un boîtier du dispositif à remplir, en particulier stérile.

14. Dispositif à emballer selon l'une des revendications précédentes,
**caractérisé en ce**
- **que** dans la zone à verser, le rail de transport (2) est guidé à l'extérieur du dispositif à verser, le dispositif à verser entourant le charriot de transport sur tout le pourtour.

15. Procédé d'exploitation d'un dispositif à emballer, en particulier d'un dispositif à verser, dans lequel
- au moins un charriot de transport (4) est déplacé le long d'un rail de transport (2), et
- des emballages sont déplacés en un flux le long d'une zone productive du rail de transport par les charriots de transport,
**caractérisé en ce**
- **que** le charriot de transport est guidé directement sur le rail de transport en amont de la zone productive, et que le charriot de transport est séparé spatialement du rail de transport par une rampe (8), de telle sorte que le charriot de transport est guidé indirectement sur une paroi (16) de la zone productive par le rail de transport dans la zone productive.
